# NEUE EUROPÄISCHE PATENTSCHRIFT

(11) **EP 0 392 645 B2**
(45) Veröffentlichungstag und Bekanntmachung des Hinweises auf die Entscheidung über den Einspruch: **31.07.1996**
(45) Hinweis auf die Patenterteilung: 25.08.1993
(21) Anmeldenummer: 90250094.1
(22) Anmeldetag: 06.04.1990
(51) Int. Cl.: B29C 45/22

(54) **Verfahren und Vorrichtung zum Herstellen von Mehrkomponentenspritzgiessteilen**
Method and apparatus for producing multicomponent injection moulded parts
Procédé et dispositif pour fabriquer des pièces moulées par injection à plusieurs composantes

(30) Priorität: 12.04.1989 DE 3912426
(43) Veröffentlichungstag der Anmeldung: 17.10.1990
(73) Patentinhaber: MANNESMANN Aktiengesellschaft, D-40027 Düsseldorf (DE)
(72) Erfinder: Gläser, Arnaldo, Dipl.-Ing., D-8567 Neunkirchen am Sand (DE)
(74) Vertreter: Meissner, Peter E., Dipl.-Ing.

(56) Entgegenhaltungen:
- EP-A- 0 137 250
- EP-A- 0 261 350
- EP-A- 0 262 470
- DE-A- 2 449 758
- DE-A- 3 305 931
- DE-B- 2 623 308
- DE-C- 2 259 818
- US-A- 4 808 101

## Beschreibung

Die Erfindung betrifft ein Verfahren und eine Vorrichtung zum Herstellen von Mehrkomponentenspritzgießteilen entsprechend den Ansprüchen 1 und 3.

Aus der US 4 808 101 ist ein Spritzkopf bekannt, bei dem der Spritzkopfdüse mehrere, unterschiedliche, Kunststoffe zugeführt werden. Um diese Kunststoffe jeweils auf ihr optimale Temperatur zubringen bzw auf dieser zuhalten, sind für die einzelnen Kanäle gesonderte Heizeinrichtungen vorgesehen. Bei der dort konkret dargestellten Lösung, kann einer der Kunststoffe zweistufig erwärmt werden d.h. erfolgt zunächst eine Erwärmung des Kunststoffes beim Durchströmen des Zufuhrungskanales und abschließend unmittelbar im Spritzdüsenkopf. Vor der Zuführung der unterschiedlichen Kunststoffe in den Bereich der Spritzkopfdüse, sind die Zuführkanale durch einem Luftspalt thermisch getrennt.

Aus der DE-A-22 59 818 ist eine Vorrichtung bekannt, bei der eine axial verschiebbare Nadel in einer durch den Spritzkopf geführten Hülse angeordnet ist. Die Bohrung des Spritzkopfes bzw. die Bohrung der Hülse bilden die Nachstellung der Hülse die Zentrale Düse. Hülse und Schließnadel bilden ihre Schließstellung einen Teil der Innenwandung der Spritzgußform.

Das bei dieser bekannten Vorrichtung sich im Spritzkopf während des Gießens befindende Kunststoffvolumen ist relativ hoch. Bei längeren Verweilzeiten im Spritzkopf verkrackt das Kunststoffmaterial und setzt die Bohrungen im Spritzkopf zu.

Beim Schließen der Zentraldüse durch axiales Bewegen der Nadel oder der Hülse wird die zwischen dem Spritzzylinder und der Düse sich befindende Kunststoffmasse komprimiert. In nachteiliger Weise wird die Masse unter hohem Druck eingeschlossen. Dazu kommt, daß das Absperren der Regel schlagartig erfolgt. Die Folge hiervon ist, daß gerade im kritischen Bereich der kraftschlüssigen Verbindung zwischen dem Kopf jedes Schneckenzylinders und der Auflagefläche am Spritzkopf Kunststoffmaterial austritt. Hierdurch wird der Anlagensitz verunreinigt. Diese Verunreinigungen fördern Leckagen im Bereich der Düsenanlagensitze.

Die axialen Bewegungen der Nadel sowie der Hülse erfordert eine ausreichende Passung in den Lagerflächen. Durch die Schließ- und Öffnungsbewegung tritt in den Passungsflächen Verschleiß auf mit der nachteiligen Folge, daß Material zwischen die Berührflächen eindringt und die Verschleißrate erhöht. Hinzu tritt, das Kunststoffmaterial auf der der Düse abgewandten Seite der Nadel und der Hülse austritt und sich im Bereich der Betätigungselemente aufbaut. So werden bereits nach kurzer Zeit die Schließelemente, insbesondere die bei der bekannten Vorrichtung vorgesehenen Federn, verschmutzt und neigen zu Brüchen.

Die Nadel der bekannten Vorrichtung lehnt sich mit ihrem rückwärtigen Ende an den Schließmechanismus an. Sie ist somit nur in Schließrichtung kraftschlüssig geführt, aber nicht definiert rückhohlbar. Das Zurückbewegen der Nadel wird durch den Massedruck des Kunststoffs bewirkt.

Aufgabe der Erfindung ist es, ein Verfahren und eine Vorrichtung zur Durchführung des Verfahrens zu finden, bei dem mit einfachen baulichen Mitteln und in instandhaltungsfreundlicher Weise das Herstellen qualitativ hochwertiger Mehrkomponentenspritzgießteile ermöglicht wird und betrieblich bedingte Betriebsunterbrechungen sicher beherrscht werden.

Die Erfindung löst diese Probleme mit den Merkmalen der Ansprüche 1 und 3.

Durch axiales Verschieben und die Möglichkeit des gleichzeitigen Verdrehens der Hülse der erfindungsgemäßen Vorrichtung können die Einzelkomponenten fein dosiert der Spritzkopfdüse zugeführt werden. Bei beiden Bewegungen der Hülse wird der Massestrom beim Austritt aus den Kanälen des Spritzkopfes ausschließlich geschert. In vorteilhafter Weise werden Druckstöße, die beim Öffnen von Kanälen durch axiales Bewegen von Stöpfen oder ähnlichem auftreten durch dieses Abscheren nicht in das rückwärtige Zuführsystem eingeleitet.

Durch die Kombination von Dreh- und Schiebebewegung der Hülse werden die Einzelkomponenten völlig unabhängig voneinander von der kompletten Absperrung bis zum totalen öffnen des Massestromes mengenmäßig beeinflußt.

In dem Spritzkopf sind beliebig viele Kanäle mit angeschlossenen Schneckenzylindern und in der Hülse entsprechend viele Bohrungen bzw. Absätze vorsehbar. Durch Anzahl, Form und Anordnung der Hülsenbohrungen bzw. Absätze sind mehr als zwei Einzelkomponenten der Spritzkopfdüse zuführbar, so sind bis zu beispielsweise acht Komponenten technisch realisierbar.

Die Dosierung der Einzelströme erfolgt stufenlos durch Bewegung der Hülse. Eine besonders feinfühlige Bewegung läßt sich durch die Drehbewegung der Hülse erreichen, da mit einfachen Mitteln, nämlich durch Anordnung eines ausreichend langen Hebelarms und die damit ausnutzbare Übersetzung höchste Genauigkeiten zu erzielen sind.

Die unterschiedlichen Mengenströme der Einzelkomponenten verweilen je nach eingestellter Dosierung zeitlich unterschiedliche lange in der Spritzvorrichtung. In Abhängigkeit von der Verweilzeit und dem Abschergrad beim Dosieren wird der Kunststoff unterschiedlich erwärmt. Bei der vorliegenden Erfindung wird die Temperatur der Komponenten bei allen Betriebszuständen sicher geführt. Durch Erwärmen oder Kühlen der Einzelkomponenten nach Verlassen der Schneckenzylinderwird der Kunststoff mit dergewünschten Temperatur dem Spritzkopf zugeführt. So wird beispielsweise bei komplettem Absperren eines Volumenstroms diese Einzelkomponente gekühlt, um ein Verkracken zu verhindern. Bei erneutem Anfahren des Volumenstroms ist dieser kurzfristig und gezielt erwärmbar.

Die Feineinstellung der Temperatur des Kunststoffes wird durch Dissipation erreicht. Hierzu wird die Kunststoffmasse zwischen der Stirn innerhalb des Spritzkopfes und der Stirnfläche des Nadelkopfes geschert. Durch axiale Bewegung wird die Nadel von der Spritzkopfdüse wegbewegt und diese geöffnet. Durch mechanisch exakt geführte Verstellelemente ist eine Feinstdosierung der Axialbewegungen und damit des Scherspaltes möglich.

Einfluß auf die Temperatur des Kunststoffes wird über Wärmetausch und durch Scheren der Masse genommen. Die für die Regelung erforderlichen Meßdaten werden durch Temperaturfühler gewonnen, die in unmittelbarer Nähe der Spritzkopfdüse bzw. der Kanäle des Spritzkopfes angeordnet sind.

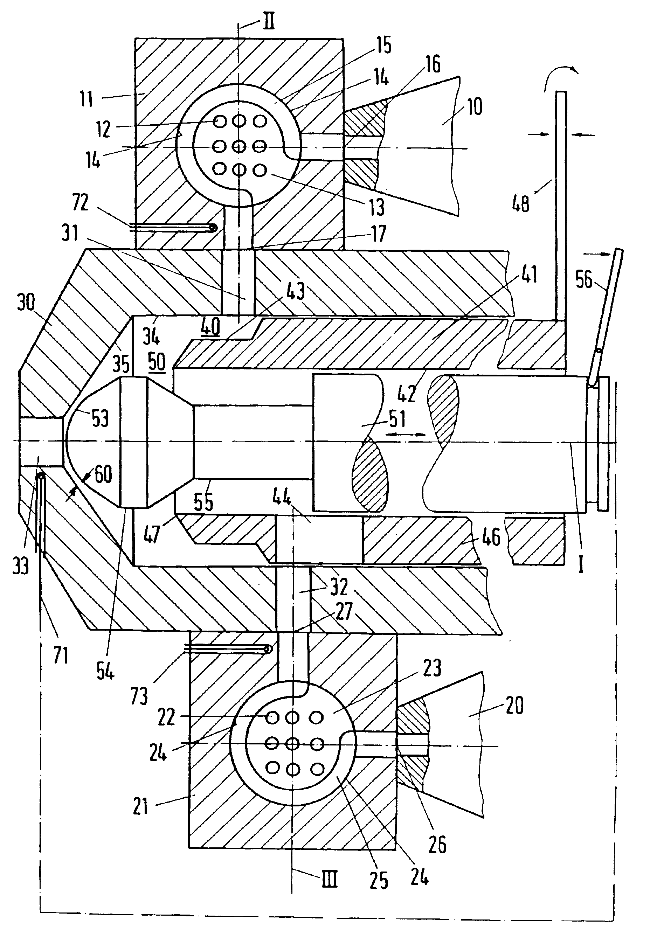

Ein Beispiel der Erfindung ist in der Figur 1 dargelegt.

Die Figur 1 zeigt Teile von zwei Schneckenzylindern 10, 20, deren Mündung sich gegen Wärmetauscherelemente 11, 21 lehnt. Die Wärmetauscherelemente 11, 21 weisen Kanäle auf, die die Austritte 16, 26 der Schneckenzylinder 10, 20 mit Eintritten 17, 27 eines Spritzkopfes 30 verbinden. Die Wärmetauscherelemente 11, 21 weisen dabei zylindrische Körper 13, 23 auf, die lösbar in den Gehäusen 18, 28 angeordnet sind. In den Zylinder 13, 23 sind Kanäle 12, 22 für das Wärmemedium eingebracht. Im Zylinderaußenmantel 14, 24 ist eine spiralförmige Rille 15, 25 eingearbeitet. In der Zeichnung ist vereinfacht nur ein Teil der Spirale gezeichnet. In den Gehäusen 18, 28 sind Thermoelemente 72, 73 in der Nähe zum Eintrittspritzkopf 17, 27 angeordnet.

Die Eintritte zum Spritzkopf 17, 27 führen zu den Kanälen 31, 32, die in der Bohrung 34 münden. Im Zentrum der Bohrung 34 ist die Spritzkopfdüse 33 angeordnet. Die Achse II des Kanals 31 und die Achse III des Kanals 32 sind senkrecht zur Mittenachse I angeordnet. Der Abstand der Mittenachsen II und III ist so gewählt, daß ein Absperren durch eine in der Bohrung 34 angeordnete Hülse 41 unabhängig voneinander möglich ist. Der Parallelabstand der Mittenachse II und III ist dabei größer als die Summe der Radien der Kanäle 31, 32. Die koaxial zum Spritzkopf 30 innerhalb der Bohrung 34 vorgesehene Hülse 41 besitzt eine Hülsenbohrung 42. Im Kopfbereich der Hülse 41 ist ein Absatz 43 vorgesehen in einer Größe, die ein bequemes Fließen des Materialstroms vom Kanal 31 zur Spritzkopfdüse 33 erlaubt. Die Länge des Absatzes 43 ist so gewählt, daß durch axiales Verschieben der Hülse 41 der Kanal 31 geschlossen werden kann, ohne daß die Hülsenstirnfläche 47 sich gegen die Stirn 35 des Spritzkopfes 30 lehnt.

In der Wand 46 der Hülse 41 ist in der dem Kopf abgewandten Hülsenteil anschließend an den Absatz 43 ein Durchtritt 44 vorgesehen. Der Durchtritt 44 besitzt die Form eines Langloches mit einem Durchmesser der Schmalseiten, die den Durchmesser des Kanals 32 entspricht.

An der Hülse 41 sind Steuerelemente 48 vorgesehen, mit denen die Hülse sowohl axial bewegt, wie auch um die Mittenachse I verdreht werden kann.

Die Innenbohrung 34 des Spritzkopfes 30 und die Außenwand des Absatzes 43 der Hülse 41 bilden die Ringdüse 40.

Innerhalb der Hülsenbohrung 42 der Hülse 41 ist eine Nadel 51 vorgesehen. Der Kopf der Nadel 51 ist als Halbkugel 53 ausgebildet. An die Halbkugel 53 schließt sich eine Zylinderfläche 54 an, deren Durchmesser kleiner ist als der Durchmesser des Hauptkörpers der Nadel 51. Vorzugsweise beträgt dieser Durchmesser das 0,9-fache des Durchmessers der Hülsenbohrung 42, die nur geringfügig größer ist als der Durchmesser der Nadel 51.

Im vorderen Bereich an die Zylinderfläche anschließend ist eine Nut 55 vorgesehen. Diese Nut 55 weist eine Länge auf, bei der auch bei Verschieben von Nadel 51 und Hülse 41 relativ zueinander der Materialzufluß von dem Kanal 32 durch den Durchtritt 44 gewährleistet ist.

Am Fußende der Nadel sind Steuerelemente 56 vorgesehen, die denen die Nadel in axialer Richtung verschiebbar ist.

Das Kopfende der Nadel 51 wird in Schließstellung mit der Außenfläche der Halbkugel 53 gegen die Stirnfläche 35 des Spritzkopfes 30 gepreßt. Während des Betriebes wird die Nadel 51 nur soweit axial verschoben, das ein Ringspalt 60 zwischen der Halbkugel 53 und der Stirnfläche 35 entsteht, so daß beim Fließen des Kunststoffmaterials auf dieses eine Scherwirkung ausgeübt wird. Die Nadel 51 im Bereich der Zylinderfläche 54 und der Halbkugel 53 bilden mit der Stirnfläche 35 des Spritzkopfes 30 die Zentraldüse 50. Im Spritzkopf 30 im Bereich der Spritzkopfdüse 33 ist ein Thermoelement 71 vorgesehen, das steuerungsmäßig mit dem Steuerelement 56 der Nadel 51 in Wirkverbindung steht.

## Patentansprüche

1. Verfahren zum Herstellen von Mehrkomponentenspritzgießteilen, bei dem Einzelkomponenten des Kunststoffes über getrennt angeordnete Spritzzylinder einer Spritzkopfdüse zugeführt werden, wobei die Mengen der Einzelkomponenten des Kunststoffes bei der Zuführung der Spritzkopfdüse stufenlos und voneinander unabhängig dosiert werden, dadurch gekennzeichnet,
daß die Temperatur des Kunststoffes in einer ersten Stufe nach Verlassen der einzelnen Spritzzylinder voreingestellt und in einer zweiten Stufe gemeinsam unmittelbar vor Eintritt in die Spritzkopfdüse abschließend eingestellt wird.

2. Verfahren nach Anspruch 1,
dadurch gekennzeichnet,
daß in der zweiten Stufe die Temperatur des Kunststoffes durch Dissipation, z. B. Scherung, verändert wird.

3. Vorrichtung zur Durchfuhrung des Verfahrens nach den Ansprüchen 1 oder 2, mit einer im Spritzkopf (30) angeordneten Spritzkopfdüse (33), die mit mindestens zwei unabhängigen Schneckenzylindern (10, 20) über Kanäle in Verbindung steht und in dem koaxial zur Achse der Spritzkopfdüse eine Ringdüse (40) sowie eine Zentraldüse (50) angeordnet sind, wobei zwischen dem Schneckenzylinder und dem Spritzkopf Warmetauschelementen vorgesehen sind, die Kanäle für Kühl- bzw. Wärmemedien aufweisen,
daß am Außenmantel (14, 24) der Zylinder (13, 23) zum Gehäuse der Wärmetauschelemente (11, 21) weisend spiralförmig geführte Rillen (15, 25) für den Kunststoffstrom zwischen Austritten (16, 26) der Schneckenzylinder (10, 20) und Eintritten zum Spritzkopf (17, 27) vorgesehen sind,
daß die Ringdüse (40) durch die Mantelflächen einer in den Spritzkopf eingebrachten Bohrung (34) und einer axial verschiebbaren und um die Mittelachse (I) drehbaren Hülse (41) und die Zentraldüse (50) durch die Mantelflächen einer in die Hülse (41) eingebrachten Bohrung (42) und einer axial verschiebbaren Nadel (51) begrenzt sind und
daß der Kopf der Nadel (51) im Bereich der Spritzkopfdüse (33) zur Bildung eines Ringspaltes (60) der Innenseite der Stirn (35) des Spritzkopfes (30) näherbar ist.

4. Vorrichtung nach Anspruch 3,
dadurch gekennzeichnet,
daß im Gehäuse der Wärmetauschelemente (11, 21) die Eintritte zum Spritzkopf (17, 27) mit Kanälen (31, 32), die zu Bohrungen (34) des Spritzkopfes (30) führen, in Verbindung stehen.

5. Vorrichtung nach Anspruch 4,
dadurch gekennzeichnet,
daß die Kanäle (31, 32) senkrecht zur Mittenachse (I) des Spritzkopfes (30) angeordnet sind und der Parallelabstand der Mittenachsen (II bzw. III) der Kanäle (31 bzw. 32) größer ist als die Summe der Radien der Kanäle (31, 32).

6. Vorrichtung nach Anspruch 3,
dadurch gekennzeichnet,
daß die Hülse (41) kopfseitig einen Absatz (43) aufweist mit einer Minderung des Hülsenaußendurchmessers von etwa einem Drittel der Hülsenwanddicke (46) und einer Länge, die kleiner ist als der Abstand von der Stirn (35) der Bohrung (34) bis zur Außenwandung des Kanals (31) des Spritzkopfes (30),

7. Vorrichtung nach Anspruch 3,
dadurch gekennzeichnet,
daß die Hülse (41) einen Druchtritt (44) aufweist, der eine Verbindung zwischen dem Kanal (32) und der Zentraldüse (50) herstellt und der Durchtritt (44) die Form eines Langloches aufweist mit einem Durchmesser, der größer ist als der Durchmesser des Kanals (32) und eine Länge von mindestens dem 3-fachen des Durchmessers des Kanals (32).

8. Vorrichtung nach einem der oben genannten An
sprüche,
dadurch gekennzeichnet,
daß die Hülse (41) zur Dreh- und Axialbewegung ein Steuerelement (48) aufweist.

9. Vorrichtung nach Anspruch 43
dadurch gekennzeichnet,
daß die axial verschiebbare Nadel (51) eine Stirnfläche (53) aufweist, die halbkugelförmig ausgebildet ist.

10. Vorrichtung nach Anspruch 9,
dadurch gekennzeichnet,
daß sich an die Halbkugel (53) der Nadel (51) eine koaxial zur Mittenachse (I) angeordnete Zylinderfläche (54) anschließt mit einem Durchmesser, der etwa dem 0,9-fachen des Durchmessers (42) der Ringdüse (40) entspricht.

11. Vorrichtung nach Anspruch 10,
dadurch gekennzeichnet,
daß im Kopfbereich der Nadel (51) sich an die Zylinderfläche (54) anschließend eine Nut (55) vorgesehen ist mit einer Tiefe, die etwa dem Radius des Kanals (32) des Spritzkopfes (30) entspricht, und einer Länge, die größer ist als die Lange des Abstandes der Stirnfläche (47) zur Außenwandung des Durchtritts (44) der Hülse (41).

12. Vorrichtung nach einem der oben genannten Ansprüche,
dadurch gekennzeichnet,
daß an der Nadel (51) zur Axialbewegung ein Steuerelement (56) angreift.

13. Vorrichtung nach den Ansprüchen 8 bis 12,
dadurch gekennzeichnet,
daß Steuerelemente (48 und 56) mit am Spritzkopf (30) und an den Wärmetauschelementen (11, 21) vorgesehenen Thermoelementen (70) steuerungsmäßig in Verbindung stehen.

## Claims

1. A method of producing multi-component injection moulded parts, in which individual components of the plastics material are supplied to an injection head nozzle by way of separately arranged injection cylinders, the amounts of the individual components of the plastics material upon the supply to the injection head nozzle being dosed in a stepless manner and independently of one another, characterised in that the temperature of the plastics material is pre-adjusted in a first stage after leaving the individual injection cylinders and is finally adjusted in a second stage jointly immediately prior to entry into the injection head nozzle.

2. A method according to claim 1, characterised in that in the second stage the temperature of the plastics material is varied by dissipation, e.g. shearing action.

3. A device for carrying out the method according to claims 1 or 2, having an injection head nozzle (33) which is arranged in the injection head (30) and which communicates by way of ducts with at least two independent worm cylinders (10, 20) and in which a ring nozzle (40) as well as a central nozzle (50) are provided coaxially with the axis of the injection head nozzle, with heat exchange elements provided between the worm cylinder and the injection head which have ducts for cooling or heating media, in that provided on the outer jacket (14, 24) of the cylinders (13, 23) and pointing to the housing of the heat exchange elements (11, 21) are spirally conducted grooves (15, 25) for the flow of plastics material between outlets (16, 26) of the worm cylinders (10, 20) and inlets to the injection head (17, 27), in that the ring nozzle (40) is defined by the surface areas of a bore (34) introduced into the injection head and an axially displaceable sleeve (41) which is rotatable about the centre axis (I) and the central nozzle (50) is defined by the surface areas of a bore (42) introduced into the sleeve (41) and an axially displaceable needle (51) and in that the head of the needle (51) in the region of the injection head nozzle (33) for the formation of a ring gap (60) can be brought closer to the inside of the front (35) of the injection head (30).

4. A device according to claim 3, characterised in that in the housing of the heat exchange elements (11, 21) the inlets to the injection head (17, 27) communicate with ducts (31, 32) which lead to bores (34) in the injection head (30).

5. A device according to claim 4, characterised in that the ducts (31, 32) are arranged normal to the centre axis (I) of the injection head (30) and the parallel spacing of the centre axes (II or III respectively) of the ducts (31 or 32 respectively) is greater than the sum of the radii of the ducts (31, 32).

6. A device according to claim 3, characterised in that the sleeve (41) has at the head side an offset (43) with a reduction of the outside diameter of the sleeve of about one-third of the wall thickness (46) of the sleeve and a length which is smaller than the distance from the front (35) of the bore (34) as far as the outer wall of the duct (31) of the injection head (30).

7. A device according to claim 3, characterised in that the sleeve (41) has a passage (44) which establishes a connection between the duct (32) and the central nozzle (50) and the passage (44) has the form of a slotted hole having a diameter which is greater than the diameter of the duct (32) and a length of at least three times the diameter of the duct (32).

8. A device according to any one of the above-mentioned claims, characterised in that the sleeve (41) has a control element (48) for the rotary and axial movement.

9. A device according to claim 43, characterised in that the axially displaceable needle (51) has a front surface (53) which is hemispherical in design.

10. A device according to claim 9, characterised in that linking on to the hemisphere (53) of the needle (51) is a cylindrical surface (54) arranged coaxially with the centre axis (I) and having a diameter which corresponds to about 0.9 times the diameter (42) of the ring nozzle (40).

11. A device according to claim 10, characterised in that provided in the head region of the needle (51) and linking on to the cylindrical surface (54) is a groove (55) having a depth which corresponds approximately to the radius of the duct (32) of the injection head (30), and a length which is greater than the length of the distance of the front surface (47) from the outer wall of the passage (44) of the sleeve (41).

12. A device according to any one of the above-mentioned claims, characterised in that a control element (56) acts on the needle (51) for the axial movement.

13. A device according to claims 8 to 12, characterised in that control elements (48 and 56) communicate in control respects with thermocouple elements (70) provided on the injection head (30) and on the heat exchange elements (11, 21).

## Revendications

1. Procédé pour fabriquer des pièces moulées par injection à plusieurs composants, dans lequel des composants individuels de la matière synthétique sont amenés, par des cylindres d'injection agencés de façon séparée, à une buse de tête d'injection, les quantités des composants individuels de la matière synthétique, lors de l'amenée à la buse de tête d'injection, étant dosées de façon continue et indépendamment les unes des autres,
caractérisé en ce que la température de la matière synthétique est préréglée, dans une première étape, après sortie des cylindres d'injection individuels et, dans une seconde étape, est réglée définitivement, collectivement, directement avant l'entrée dans la buse de tête d'injection.

2. Procédé selon la revendication 1,
caractérisé en ce que, dans la seconde étape, la température de la matière synthetique est modifiée par dissipation de chaleur, par exemple cisaillement.

3. Dispositif pour mettre en oeuvre le procédé selon la revendication 1 ou 2, comportant une buse (33) de tête d'injection agencée dans la tête d'injection (30) qui est reliée, par l'intermédiaire de canaux, à au moins deux cylindres à vis indépendants (10,20), et dans laquelle, coaxialement à l'axe de la buse de tête d'injection, sont agencées une buse annulaire (40) ainsi qu'une buse centrale (50), entre le cylindre à vis et la tête d'injection, étant prévus des éléments d'échange thermique qui présentent des canaux pour des fluides de refroidissement ou de réchauffement, sur l'enveloppe externe (14,24) des cylindres (13,33), étant prévues des rainures (15,25) pour le flux de matière synthétique, guidées en forme de spirale de façon orientée vers le boîtier des éléments d'échange thermique (11,21), entre des sorties (16,26) des cylindres à vis (10,20) et des entrées vers la tête d'injection (17,27), la buse annulaire (40) étant limitée par les surfaces d'enveloppe d'un perçage (34) prévu dans la tête d'injection et d'un manchon (41) axialement déplaçable et pouvant tourner autour de l'axe central (I), et la buse centrale (50) étant limitée par les surfaces d'enveloppe d'un perçage (42) agencé dans le manchon (41) et d'une aiguille (51) axialement déplaçable, et la tête de l'aiguille (51), dans la zone de la buse de tête d'injection (33), pouvant être rapprochée de la face interne du front (35) de la tête d'injection (30) pour former une fente annulaire (60).

4. Dispositif selon la revendication 3,
caractérisé en ce que, dans le boitier des éléments d'échange thermique (11,21), les entrées vers la tête d'injection (17,27) sont reliées à des canaux (31,32) qui mènent au perçage (34) de la tête d'injection (30).

5. Dispositif selon la revendication 4,
caractérisé en ce que les canaux (31,32) sont agencés perpendiculairement à l'axe central (I) de la tête d'injection (30), et l'écartement parallèle des axes centraux (II ou III) des canaux (31 ou 32) est plus grand que la somme des rayons des canaux (31,32).

6. Dispositif selon la revendication 3,
caractérisé en ce que le manchon (41), du côté de la tête, présente un décrochement (43), avec une diminution du diamètre externe du manchon d'environ un tiers de l'épaisseur de paroi (46) du manchon et une longueur qui est plus petite que la distance entre le front (35) du perçage (34) et la paroi externe du canal (31) de la tête d'injection (30).

7. Dispositif selon la revendication 3,
caractérisé en ce que le manchon (41) présente un passage (44) qui forme une liaison entre le canal (32) et la buse centrale (50), et le passage (44) présente la forme d'un trou oblong avec un diamètre qui est plus grand que le diamètre du canal (32) et une longueur qui est au moins égale à trois fois le diamètre du canal (32).

8. Dispositif selon l'une ces revendications précédentes,
caractérisé en ce que le manchon (41) présente un élément de commande (48) pour tourner et déplacer axialement celui-ci.

9. Dispositif selon la revendication 3,
caractérisé en ce que l'aiguille (51) axialement déplaçable présente une face frontale (53) qui est réalisée sous forme hémisphérique.

10. Dispositif selon la revendication 9,
caractérisé en ce qu'une surface cylindrique (54) agencée coaxialement à l'axe central (I) se raccorde à l'hémisphère (53) de l'aiguille (51), avec un diamètre qui correspond à peu près à 0,9 fois le diamètre (42) de la buse annulaire (40).

11. Dispositif selon la revendication 10,
caractérisé en ce que, dans la zone de tête de l'aiguille (51), se raccordant à la surface cylindrique (54), est prévue une gorge (55) ayant une profondeur qui correspond à peu près au rayon du canal (32) de la tête d'injection (30), et une longueur qui est plus grande que la longueur de la distance entre la face frontale (47) et la paroi externe du passage (44) du manchon (41).

12. Dispositif selon l'une des revendications précédentes,
caractérisé en ce qu'un élément de commande (56) s'engage sur l'aiguille (51) pour son déplacement axial.

13. Dispositif selon les revendications 8 à 12,
caractérisé en ce que des éléments de commande (48 et 56) sont reliés, pour les commander, à des éléments thermiques (70) prévus sur la tête d'injection (30) et sur les éléments d'échange thermique (11,21).
